# EUROPEAN PATENT APPLICATION

(11) **EP 2 563 005 A1**
(43) Date of publication of application: **27.02.2013**
(21) Application number: 11772089.6
(22) Date of filing: 15.04.2011
(51) Int. Cl.: H04N 5/225, G03B 17/00

(54) **IMAGE CAPTURE DEVICE, IMAGE CAPTURE METHOD AND PROGRAMME**

(30) Priority: 22.04.2010 JP 2010098409
(71) Applicant: NEC CASIO Mobile Communications, Ltd., Kawasaki-shi Kanagawa 211-8666 (JP); NTT DOCOMO, INC., Chiyoda-ku Tokyo 100-6150 (JP)
(72) Inventor: HOSOKAWA, Satoshi, Tokyo 108-8001 (JP); WATANABE, Osamu, Tokyo 108-8001 (JP); SHIMADA, Osamu, Tokyo 108-8001 (JP); UENO, Toshiyuki, Tokyo 108-8001 (JP); ENDO, Tsugio, Tokyo 108-8001 (JP)
(74) Representative: Vossius & Partner
(86) International application number: PCT/JP2011/059877
(87) International publication number: WO 2011/132757

(57) **Abstract**

Disclosed are an image capture method and device which can reduce the image capture function start-up time of which a user is aware, even when other functions are starting-up after image capture function start-up operations have taken place. The disclosed image capture device is provided with: an image capture unit which implements image capture; a detection unit which detects start-up related operations relating to the start-up of image capture functions; and a control unit which controls the image capture unit. When the detection unit detects start-up related operations, the control unit sends a first start-up instruction to the image capture unit, and then, within a specified timing, implements at least part of an end processing for functions being started-up which are not image capture functions. Upon receiving the first activation instruction, the image capture unit implements a first start-up processing which is one part of a start-up processing for the image capture unit, and thus a speculative state is entered.

## Description

### {Technical Field}

The present invention relates to an image capture device comprising a plurality of functions including an image capture function, an image capture method and a computer program.

### {Background Art}

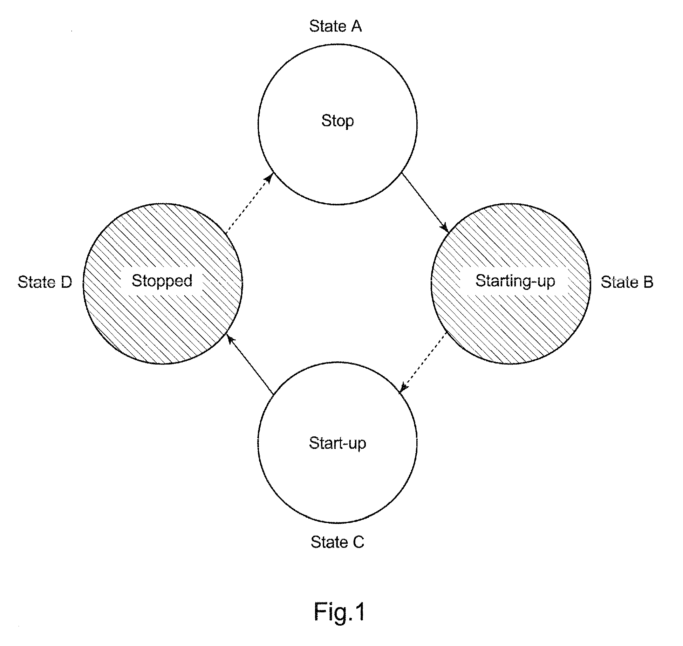

In recent years, portable terminals comprising an image capture unit (camera module) are widely used. A typical state transition of the image capture unit in such a portable terminal is illustrated in FIG. 1.

In the state diagram illustrated in FIG. 1, the states A and C in white indicate a stop state and a start-up state of the image capture unit, respectively. On the other hand, the states B and D in gray indicate transition states. The transition in a solid line from the white state to the gray state is typically executed in response to an instruction from application software. The transition in a dashed line from the gray state to the white state is automatically executed when the processing in the transition state in gray ends.

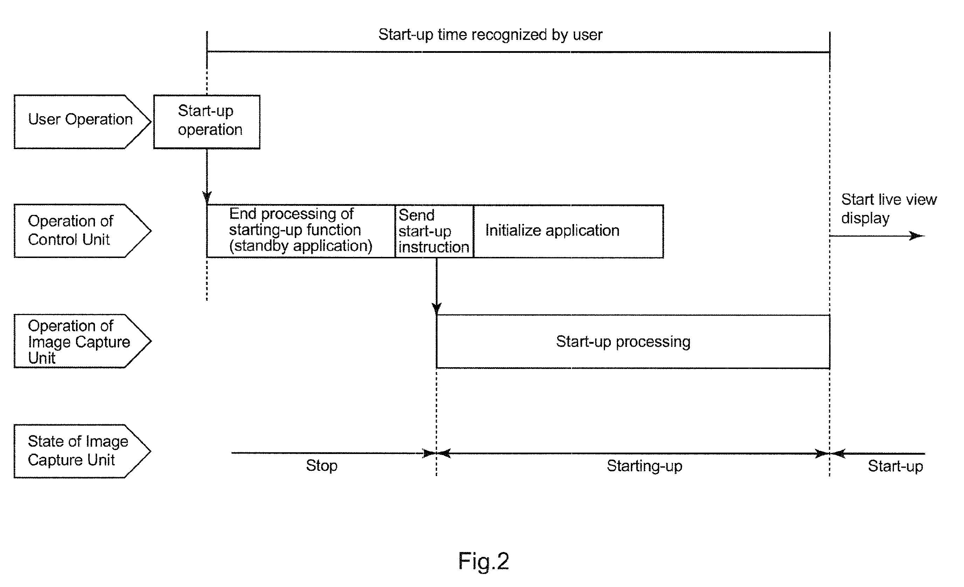

The operations of the portable terminal on start-up of the image capture unit will be described with reference to FIG. 2. FIG. 2 illustrates user operations, the operations of a control unit and the image capture unit in the portable terminal, and the states of the image capture unit. FIG. 2 illustrates a case where while a standby application by which a standby screen is displayed on a display unit in the portable terminal is starting up, a user executes a start-up operation for starting up an image capture function, for example, presses a camera key.

At first, the operations of the control unit in the portable terminal will be described. When the user executes the start-up operation of the image capture function, the control unit in the portable terminal executes a processing of ending the starting-up standby application. When completing the standby application end processing, the control unit instructs the image capture unit to execute a start-up processing. Then, the control unit initializes a camera application for controlling the image capture function.

Then, the operations of the image capture unit will be described. When receiving the start-up instruction sent from the control unit, the image capture unit in the portable terminal executes the start-up processing. A time until the image capture unit completes the start-up processing after it starts the start-up processing corresponds to the state B in FIG. 1.

Then, when completing the start-up processing in the state B, the image capture unit transmits to the state C in FIG. 1, that is, the start-up state. Then, live view display for confirming a subject in real-time starts in the display unit provided in the portable terminal.

A start-up time of the image capture unit recognized by the user is a time until the live view display starts after the user executes the start-up operation. Thus, in the operations illustrated in FIG. 2, when a time of the start-up processing by the image capture unit or a time of the standby application end processing is longer, the start-up time of the image capture unit recognized by the user is also longer. Thereby, there is a problem that the user is likely to miss a photo opportunity.

Patent Literatures 1 to 4 describe therein a technique for shortening the start-up time of the image capture unit recognized by the user.

A digital camera described in patent literature PTL1 executes part of a start-up processing of an image capture unit when a user's hand touches a pre-boot switch. When a start-up switch of an image capture system is operated, the rest of the start-up processing of the image capture unit is executed.

An image capture device described in patent literature PTL2 starts part of a start-up processing of an image capture unit when a user removes a lens cover. Then, when the user operates a start-up button of the image capture unit, the rest of the start-up processing of the image capture unit is executed.

An image capture device described in patent literature PTL3 executes part of a start-up processing of an image capture unit when a user's hand touches a specific operation key. Then, when the operation key is pressed, the rest of the start-up processing of the image capture is executed.

An image capture device described in patent literature PTL4 detects a displacement of an acceleration of the main body and executes part of a start-up processing of an image capture unit when a user takes the image capture device from a pocket or bag. Then, when the user presses a start-up button of the image capture unit, the rest of the start-up processing is executed.

Patent literature PTL5 describes therein a technique for shortening an application start-up time. An information processing apparatus described in Patent Literature 5 executes loading of an application program and initializing of variables used in the application program in parallel.

### {Citation List}

### {Patent Literature}

PTL1: JP 2003-264732 A
PTL2: JP 2005-286902 A
PTL3: JP 2006-157374 A
PTL4: JP 2009-177563 A
PTL5: JP 2009-259076 A

### {Summary of Invention}

### {Technical Problem}

A portable terminal comprising an image capture unit typically mounts thereon various applications having the functions such as standby function, call function and animation reproduction function in addition to the image capture function. Thus, on start-up of the image capture function in such a portable terminal, in many cases, other functions which are starting up on the start-up of the image capture function have to be ended.

However, the techniques described in PTL1 to PTL5 do not assume that other functions are starting up on the start-up operation of the image capture function.

Thus, also when the techniques described in PTL1 to PTL5 are used, if the processing of ending other function (the standby application end processing in FIG. 2) takes some time, the start-up time of the image capture function recognized by the user takes a longer time.

In consideration of the problem, it is an object of the present invention to provide an image capture device and an image capture method capable of shortening a start-up time of an image capture function recognized by a user also when other function is starting up on the start-up operation of the image capture function.

### {Solution to Problem}

According to the present invention, there is provided an image capture device including: an image capture unit configured to execute image capturing; a detection unit configured to detect start-up related operations relating to start-up of an image capture function; and a control unit configured to control the image capture unit, wherein when the detection unit detects the start-up related operation, the control unit sends a first start-up instruction to the image capture unit, and then executes a processing of ending at least part of starting-up functions other than the image capture function at a predetermined timing, and when receiving the first start-up instruction, the image capture unit executes a first start-up processing as part of the start-up processing of the image capture unit thereby to enter a speculative state.

According to the present invention, there is provided an image capture method including: a detection step of detecting start-up related operations relating to start-up of an image capture function; a first start-up instruction step of, when the start-up related operation is detected in the detection step, sending a first start-up instruction; an end step of, after the first start-up instruction is sent in the first start-up instruction step, ending at least part of starting-up functions other than the image capture function at a predetermined timing; and a first start-up step of, on reception of the first start-up instruction, executing a first start-up processing as part of a start-up processing of an image capture unit so that the image capture unit enters a speculative state.

According to the present invention, there is provided a computer program for causing a computer to execute: a detection step of detecting start-up related operations relating to start-up of an image capture function; a first start-up instruction step of, when the start-up related operation is detected in the detection step, sending a first start-up instruction; an end step of, after the first start-up instruction is sent in the first start-up instruction step, ending at least part of starting-up functions other than the image capture function at a predetermined timing; and a first start-up step of, on reception of the first start-up instruction, executing a first start-up processing as part of a start-up processing of an image capture unit so that the image capture unit enters a speculative state.

### {Advantageous Effect of Invention}

With the image capture device, the image capture method and the computer program according to the present invention, it is possible to shorten the start-up time of the image capture function recognized by the user also when other function is starting up on the start-up operation of the image capture function.

### {Brief Description of the Drawings}

Fig. 1 illustrates typical state transitions of an image capture unit in a portable terminal according to the present invention.
FIG. 2 illustrates exemplary start-up operations of the image capture unit in the portable terminal according to the present invention.
FIG. 3 illustrates an exemplary structure of an image capture device according to a first embodiment of the present invention.
FIG. 4 illustrates exemplary operations of the image capture device according to the first embodiment of the present invention.
FIG. 5 illustrates exemplary operations of an image capture device according to a second embodiment of the present invention.
FIG. 6 illustrates exemplary modified operations of the image capture device according to the second embodiment of the present invention.
FIG. 7 illustrates an exemplary structure of an image capture device according to a third embodiment of the present invention.
FIG. 8 illustrates exemplary operations of the image capture device according to the third embodiment of the present invention.
FIG. 9 illustrates exemplary operations of an image capture unit in the image capture device according to the third embodiment of the present invention.
FIG. 10 illustrates an exemplary structure of an image capture device according to a fourth embodiment of the present invention.
FIG. 11 illustrates exemplary operations of the image capture device according to the fourth embodiment of the present invention.
FIG. 12 illustrates exemplary operations of an image capture unit in the image capture device according to the fourth embodiment of the present invention.
FIG. 13 illustrates exemplary operations of an image capture unit in an image capture device according to a fifth embodiment of the present invention.
FIG. 14 illustrates exemplary modified operations of the image capture unit in the image capture device according to the fifth embodiment of the present invention.

### {Description of Embodiments}

Embodiments according to the present invention will be described below with reference to the drawings. However, the embodiments do not intend to limit the technical scope of the present invention.

### [First embodiment]

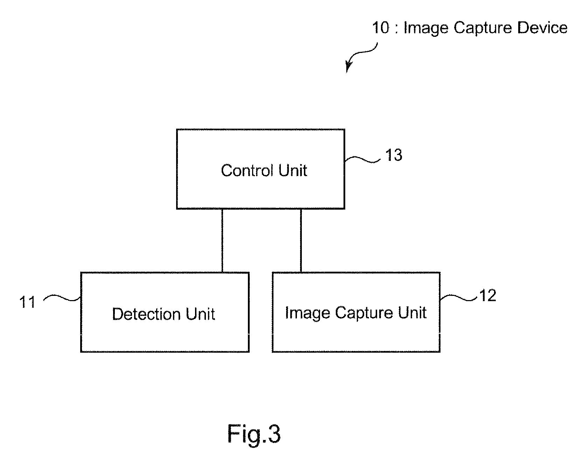

A structure of an image capture device according to a first embodiment of the present invention is illustrated in FIG. 3.

The image capture device 10 according to the present embodiment comprises a detection unit 11, an image capture unit (camera module) 12, and a control unit 13.

The detection unit 11 detects start-up related operations relating to start-up of an image capture function. The image capture unit 12 executes image capturing. The control unit 13 executes the image capture function and other functions, and controls the image capture unit 12.

When the detection unit 11 detects a start-up related operation, the control unit 13 sends a first start-up instruction to the image capture unit 12. After sending the first start-up instruction, the control unit 13 executes a processing of ending a starting-up function other than the image capture function at a predetermined timing.

On the other hand, when receiving the first start-up instruction sent from the control unit 13, the image capture unit 12 executes part of the start-up processing (which will be called first start-up processing below) of the image capture unit 12. Thereby, the image capture unit 12 enters a speculative state.

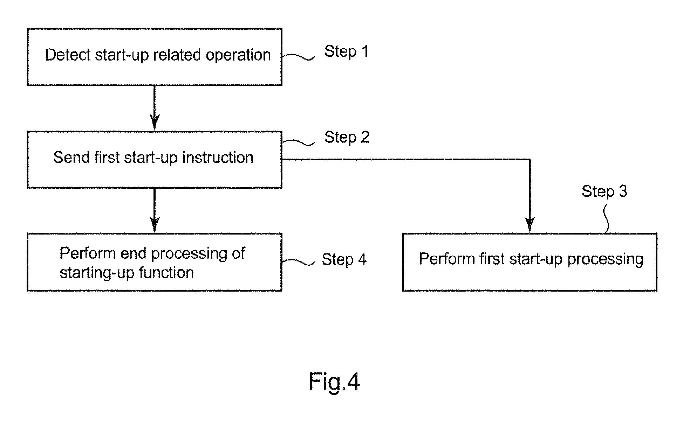

The operations of the image capture device according to the present embodiment will be described below in detail with reference to FIG. 4.

At first, when a user executes a start-up related operation of the image capture function, the detection unit 11 detects the start-up related operation (step 1). The start-up related operation according to the present embodiment is an operation of confirming start-up of the image capture function, for example, user's pressing of a camera key.

When the detection unit 11 detects the start-up related operation, the control unit 13 sends a first start-up instruction to the image capture unit 12 (step 2).

When receiving the first start-up instruction sent from the control unit 13, the image capture unit 12 executes a first start-up processing (step 3). The first start-up processing is at least part of the start-up processing of the image capture unit 12, which can be executed before an end processing in step 4 described later is completed and which can be executed before a camera application is initialized, for example. More specifically, it is a processing of preparing to output a captured image to a buffer, for example. In this case, the first start-up processing contains a processing of transferring firmware to an incorporated memory of the image capture unit 12 and a processing of taking images by the image capture unit 12, for example.

On the other hand, after sending the first start-up instruction to the image capture unit 12, the control unit 13 executes a processing of ending a staring-up function other than the image capture function at a predetermined timing (step 4). A starting-up function other than the image capture function means a function which is starting up when the detecting unit 11 detects a start-up related operation of the image capture function. For example, it is assumed that the standby application for displaying the standby screen on the display screen provided in the image capture device is starting up when the detection unit 11 detects a start-up related operation. In this case, the control unit 13 executes a processing of ending the standby application. The control unit 13 may end all the starting-up functions when the detection unit 11 detects a start-up related operation or may end only part of the starting-up functions. That is, when a plurality of applications is starting up, the control unit 13 may end all the applications or may end part of the applications. When an application having a plurality of functions is starting up, the control unit 13 may end the application itself or may end only part of the functions of the application. For example, when the standby application is starting up, the control unit 13 may end only the function of displaying a screen wallpaper without ending the function of displaying the menu bar displayed at the bottom of the screen. The control unit 13 may send the first start-up instruction and then successively start the processing of ending a starting-up function. Alternatively, after sending the first start-up instruction, the control unit 13 may start the processing of ending a starting-up function after a predetermined trigger is detected.

As described above, the control unit 13 in the image capture device 10 according to the present embodiment sends the first start-up instruction to the image capture unit 12 before starting the processing of ending a starting-up function other than the image capture function. Thereby, the image capture unit 12 can start executing the first start-up processing before the processing of ending a function which is starting up when a start-up related operation is detected is completed.

Therefore, the image capture device 10 according to the present embodiment can further shorten the start-up time of the image capture function recognized by the user than the start-up processing of the image capture unit is started after the processing of ending a starting-up function is completed as illustrated in FIG. 2.

### [Second embodiment]

An image capture device according to a second embodiment of the present invention will be described.

The image capture device according to the present embodiment has the same structure as the image capture device 10 according to the first embodiment.

The operations of the image capture device according to the present embodiment will be described. The operations from the user's start-up related operation to the processing of ending a starting-up function other than the image capture function by the control unit 13 are the same as steps 1 to 4 described in the first embodiment, and thus an explanation thereof will be omitted.

With the image capture device 10 according to the present embodiment, when the operations in steps 1 to 4 are completed, the control unit 13 sends a second start-up instruction to the image capture unit 12 (step 5). When receiving the second start-up instruction sent from the control unit 13, the image capture unit 12 executes a processing not contained in the first start-up processing in the start-up processing of the image capture unit 12 (which will be called second start-up processing below) (step 6). Then, when the second start-up processing is completed, the image capture unit 12 enters the start-up state.

When sending the second start-up instruction, the control unit 13 starts a processing of initializing the camera application for controlling the image capture function. Then, when an initialization processing necessary for displaying live view is completed in the initialization processing, the live view display is started (step 7).

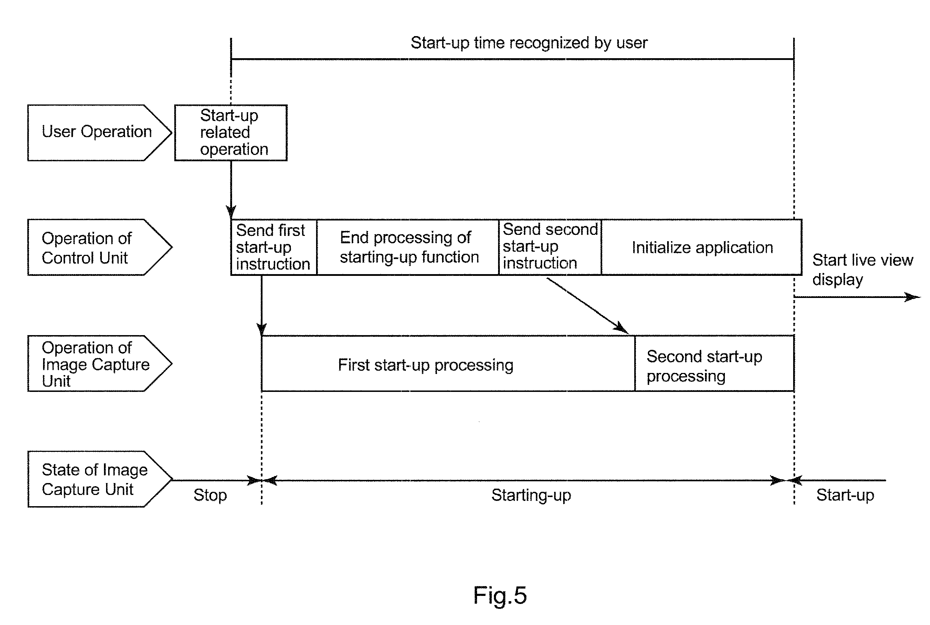

A series of operations of the image capture device 10 according to the present embodiment described above are collectively illustrated in FIG. 5. FIG. 5 illustrates the user operations, the operations of the control unit 13 and the image capture unit 12 in the image capture device 10, and the states of the image capture unit 12.

As can be seen from FIG. 5, in the image capture device according to the present embodiment, the first start-up processing of the image capture unit 12 is started before the processing of ending a function which is starting up when an start-up related operation is detected is completed. Thus, the start-up time of the image capture function recognized by the user can be further shortened than in the operations illustrated in FIG. 2.

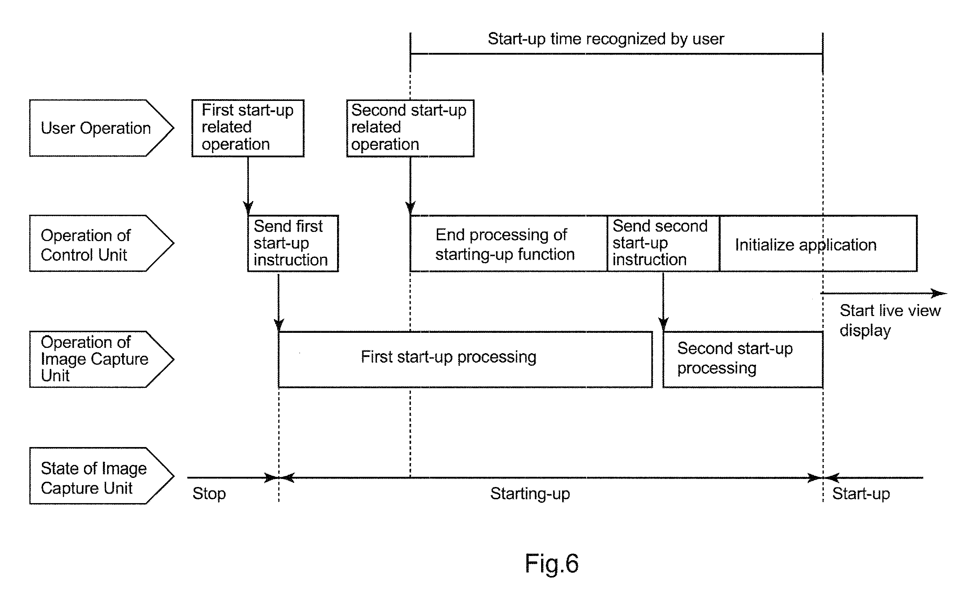

The present embodiment assumes that a user's start-up related operation of the image capture unit 12 is for confirming start-up of the image capture function, but is not limited thereto. That is, the start-up related operations may contain a first start-up related operation and a second start-up related operation. The first start-up related operation is an operation which is executed before confirming start-up of the image capture function, such as an operation of moving the cursor onto an icon for the image capture function displayed on the display screen. That is, detection of the first start-up related operation indicates that the image capture function is highly likely to be started up later. The second start-up related operation is an operation of confirming start-up of the image capture function, such as clicking an icon. Exemplary operations of the image capture device 10 in this case will be described with reference to FIG. 6.

At first, when the detection unit 11 detects a first start-up related operation, the control unit 13 sends a first start-up instruction. Then, when the detection unit 11 detects a second start-up related operation, the control unit 13 executes the processing of ending a function which is starting up when the detection unit 11 detects the second start-up related operation. That is, in the operations illustrated in FIG. 6, steps 1 to 3 are executed when the user executes the first start-up related operation, and steps 4 to 7 are executed when the second start-up related operation is executed.

In this case, the processing of starting up the image capture unit 12 is started before the user confirms start-up of the image capture function. Thus, the start-up time recognized by the user can be further shortened.

The second start-up processing needs to be started after the first start-up processing is completed. Thus, when a processing time of the first start-up processing is long, there can occur a time lag until the second start-up processing is started after the image capture unit 12 receives the second start-up instruction, as illustrated in FIG. 5. However, in the operations illustrated in FIG. 6, a timing when the first start-up processing is started can be hastened, and thus such a time lag can rarely occur. Thus, the start-up time recognized by the user can be further shortened.

### [Third embodiment]

An image capture device according to a third embodiment of the present invention will be described.

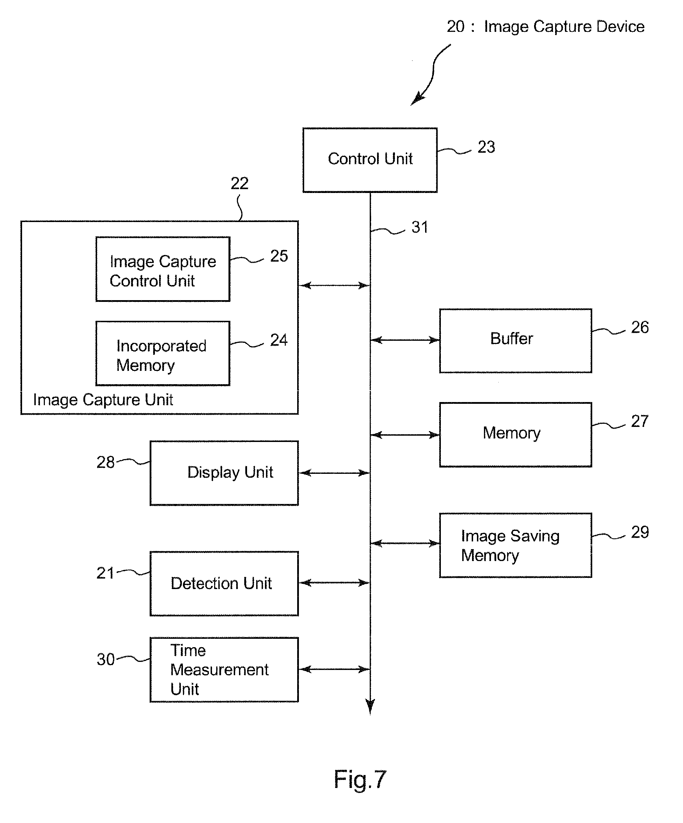

A structure of the image capture device 20 according to the present embodiment is illustrated in FIG. 7. The image capture device 20 according to the present embodiment comprises a detection unit 21, an image capture unit 22, a control unit 23, a buffer 26, a memory 27, a display unit 28, an image saving memory 29, a time measurement unit 30 and a bus 31. The image capture unit 22 comprises an incorporated memory 24 and an image capture control unit 25.

The detection unit 21 detects user's start-up related operations of the image capture function. The start-up related operations according to the present embodiment contains a first start-up related operation and a second start-up related operation. The first start-up related operation is an operation which is executed before start-up of the image capture function is confirmed and which indicates that the image capture function is highly likely to be started up later. The first start-up related operation is an operation of moving the cursor onto an icon or menu item related to the image capture function displayed on the display unit 28, for example. The image capture function includes "still image capture mode", "panorama image capture mode", and "animation capture mode", for example. On the other hand, the second start-up related operation is an operation of confirming start-up of the image capture function. The second start-up related operation is, for example, pressing the OK key or pressing a camera key while the cursor is on an icon related to the image capture function.

The image capture unit 22 takes in a captured image and outputs the captured image. Firmware for controlling the operations of the image capture unit 22 is loaded into the incorporated memory 24 provided in the image capture unit 22. The firmware is transferred from the memory 27, for example. The image capture control unit 25 controls each part provided for image capture by the image capture unit 22, such as an image sensor (not illustrated) by the firmware loaded into the incorporated memory 24.

The buffer 26 temporarily records therein the captured images output from the image capture unit 22.

The display unit 28 displays live view for displaying the captured image recorded in the buffer 26, or UI (User Interface) of OS (Operating System). The display unit 28 is configured of a LCD (Liquid Crystal Display), for example.

The memory 27 stores a camera application for controlling the image capture function, or firmware for controlling the operations of the image capture unit 22, for example.

The image saving memory 29 stores therein the captured images which are captured by the image capture unit 22 and which the user determines to save.

The time measurement unit 30 measures an elapsed time after the image capture device 20 enters a speculative state. Then, when the image capture unit 22 transits from the speculative state to other state, that is, to the start-up state or the stop state, the time measurement unit 30 resets the elapsed time measured so far.

The control unit 23 executes the OS, and controls the operations of the respective constituents in the image capture device 20 via the bus 31.

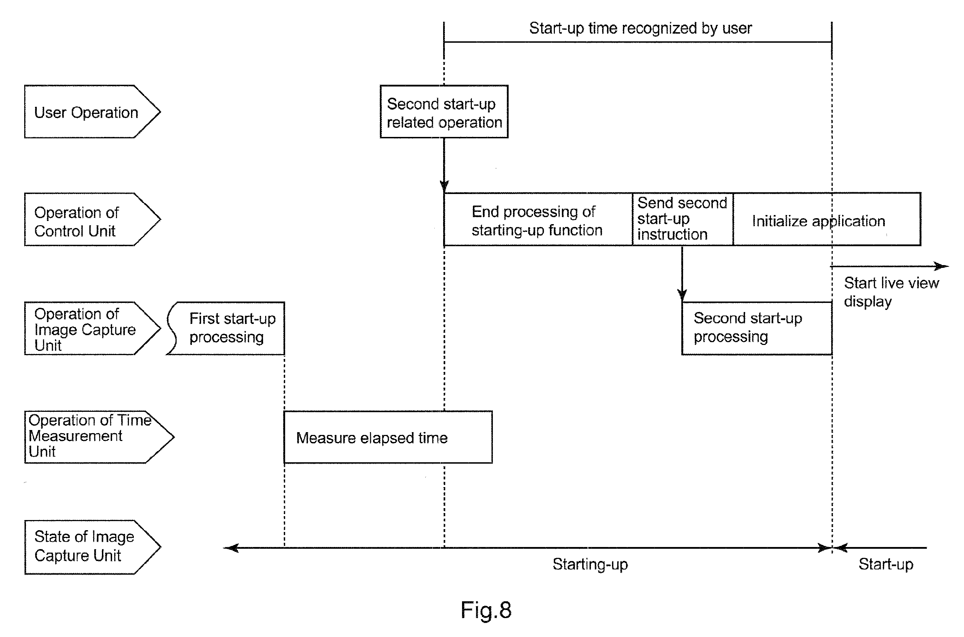

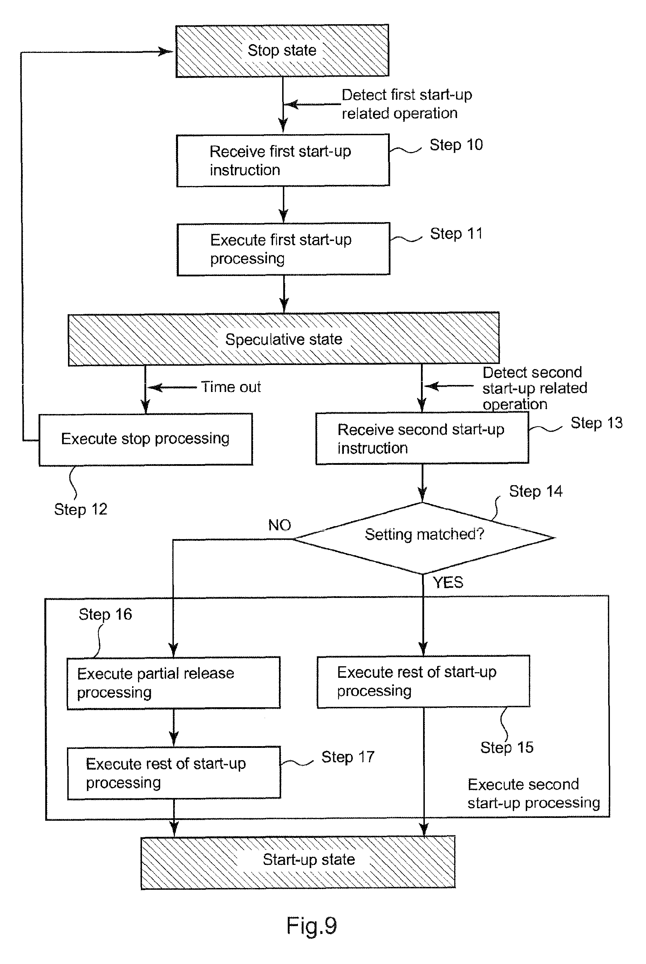

The operations of the image capture device 20 according to the present embodiment will be described below with reference to FIG. 8 and FIG. 9. FIG. 8 is a diagram illustrating the user operations, the operations of the control unit 23, the operations of the image capture unit 22, the operations of the time measurement unit 30, and the states of the image capture unit 22. In FIG. 8, the operations before the image capture unit 22 starts the first start-up processing are the same as those in FIG. 6, and thus an explanation thereof will be omitted in the figure. FIG. 9 is a diagram illustrating the operations of the image capture unit 22 of FIG. 8 in detail.

At first, when the user executes a first start-up related operation, the detection unit 21 detects the first start-up related operation.

Then, when the detection unit 21 detects the first start-up related operation, the control unit 23 sends a first start-up instruction to the image capture unit 22.

When receiving the first start-up instruction from the control unit 23 (step 10), the image capture unit 22 executes a first start-up processing (step 11). The first start-up processing is at least part of the processing which can be executed before the processing of ending a function other than the image capture function in the start-up processing of the image capture unit 22 is started, such as a processing which can be executed before the camera application is initialized. More specifically, it is a processing of preparing to output the captured image to the buffer 26, for example. In this case, the first start-up processing contains a processing of transferring firmware from the memory 27 to the incorporated memory 24 in the image capture unit 22 or a processing of capturing images by the image capture unit 22, for example. The image capture unit 22 executes the first start-up processing, and then transits from the stop state to the speculative state.

Herein, it is assumed that the image capture unit 22 executes the first start-up processing on the basis of the preset image capture parameters. The image capture parameters include image capture parameters for capturing still images in the normal mode, image capture parameters for capturing still images in the panorama mode, and image capture parameters for capturing animations, for example. That is, when the preset image capture parameters are the image capture parameters for capturing normal still images, the image capture unit 22 executes the start-up processing based on the image capture parameters for capturing normal still images. The image capture parameters preset in the image capture unit 22 may be changed in the setting by the user. That is, the user may change the setting to his/her frequently-using image capture parameters.

When the image capture unit 22 transits to the speculative state, the time measurement unit 30 starts measuring an elapsed time.

There will be described below a case in which the detection unit 21 does not detect a second start-up related processing even after a predetermined time has elapsed since the time measurement unit 30 started measuring a time. In this case, the control unit 23 instructs the image capture unit 22 to transit from the speculative state to the stop state. That is, if the user does not execute the second start-up related operation after a certain time has elapsed since the first start-up related operation, the image capture unit 22 executes the stop processing (step 12), and transits to the stop state. When the image capture unit 22 transits to the stop state, the time measurement unit 30 resets the measured elapsed time.

There will be described below a case in which the detection unit 21 detects the second start-up related operation before a predetermined time elapses after the time measurement unit 30 starts measuring a time.

In this case, the control unit 23 executes the processing of ending a function which is starting up when the detection unit 21 detects the second start-up related operation among the functions other than the image capture function. For example, when the standby application for displaying the standby screen on the display unit 28 is starting up, the standby application end processing is executed. The control unit 23 may execute only the processing of ending part of a function which is starting up when the detection unit 21 detects the second start-up related operation among the functions other than the image capture function.

When the user executes the second start-up related operation immediately after the first start-up related operation, the processing of ending a starting-up function other than the image capture function by the control unit 23 and the first start-up processing by the image capture unit 22 are partially executed in parallel.

When completing the processing of ending a starting-up function other than the image capture function, the control unit 23 sends a second start-up instruction to the image capture unit 22.

When receiving the second start-up instruction sent from the control unit 23 (step 13), the image capture unit 22 executes a second start-up processing. The second start-up processing is not contained in the first start-up processing in the start-up processing by the image capture unit 22.

The second start-up processing is executed in a different manner depending on whether the second start-up related operation executed by the user is an operation of confirming start-up with the image capture parameters matching with the preset image capture parameters.

At first, there will be described a case in which the second start-up related operation executed by the user is an operation of confirming start-up with the image capture parameters matching with the preset image capture parameters (YES in step 14). The matching of the image capture parameters indicates that the preset image capture parameters are the parameters for capturing still images in the normal mode and the image capture function confirmed to be started up is the still image capture function in the normal mode.

In this case, the image capture unit 22 executes the first start-up processing based on the parameters for capturing still images in the normal mode, and thus executes the rest of the start-up processing (step 15) to enter the start-up state.

There will be described below a case in which the second start-up related operation executed by the user is an operation of confirming start-up with the image capture parameters not matching with the preset image capture parameters (NO in step 14). The non-matching of the image capture parameters indicates that the preset image capture parameters are the parameters for capturing still images in the normal mode and the image capture function confirmed to be started up is the still image capture function in the panorama mode, for example.

In this case, the image capture unit 22 executes a processing of releasing part of the previously-executed first start-up processing in order to change the still image capture parameters in the normal mode to the still image capture parameters in the panorama mode (step 16). That is, the image capture unit 22 releases a processing which is not common between the start-up processing based on the still image capture parameters in the normal mode and the start-up processing based on the still image capture parameters in the panorama mode in the first start-up processing. On the other hand, a common processing between the start-up processing based on the still image capture parameters in the normal mode and the start-up processing based on the still image capture parameters in the panorama mode does not need to be subjected to the release processing. The common processing is a processing of transferring firmware from the memory 27 to the incorporated memory 24 in the image capture unit 22, for example. The non-common processing is a setting/initialization processing specific to each image capture mode, such as setting an image size on live view display.

When executing the processing of releasing part of the first start-up processing, the image capture unit 22 executes the rest of the processing which has not been executed in the start-up processing of the image capture unit 22 with the designated image capture parameters (step 17). Thereby, when the start-up processing is all completed by the image capture unit 22, the image capture unit 22 enters the start-up state.

On the other hand, after sending the second start-up instruction to the image capture unit 22, the control unit 23 initializes the camera application for controlling the image capture function. When initialization necessary for live view display is completed in the camera application initialization, the live view display is started on the display unit 28.

The live view display by the image capture device 20 is executed as follows. At first, a captured image sent from the image capture unit 22 is recorded in the buffer 26 under control of the control unit 23. Then, the captured image recorded in the buffer 26 is displayed on the display unit 28 under control of the control unit 23 so that the live view display is executed (step 18).

When the live view display is started on the display unit 28 and the camera application initialization is completed by the control unit 23, the user can execute image capturing. Then, when the user presses a shutter button, the image capturing is executed. A captured image to be saved based on a user's operation among the captured images is processed as an image to be saved, and is stored in the image saving memory 29.

As described above, the image capture device 20 according to the present embodiment sends the first start-up instruction to the image capture unit 22 before starting the processing of ending a starting-up function other than the image capture unit. Thereby, the first start-up processing of the image capture unit 22 can be started before the processing of ending a starting-up function other than the image capture function is completed. Thus, the image capture device 20 according to the present embodiment can further shorten the start-up time of the image capture function recognized by the user than the start-up processing of the image capture unit is started after the processing of ending a starting-up function other than the image capture function is completed as illustrated in FIG. 2.

Further, in the present embodiment, the start-up processing of the image capture unit 22 is started before the user executes the operation of confirming start-up of the image capture unit 22. Thus, the start-up time recognized by the user can be further shortened.

The first start-up processing according to the present embodiment may not contain a processing by which the user can recognize that the image capture unit 22 is starting up. The processing by which start-up of the image capture unit 22 can be recognized is a processing for which a sound with a predetermined volume or more is issued, such as autofocus processing. Thereby, the user does not know that the image capture unit 22 is already starting up before executing the second start-up related operation. That is, the user cannot recognize that the image capture unit 22 is starting up without executing the operation of confirming start-up of the image capture function. Thus, it is possible to provide the user with more comfortable use.

In the present embodiment, the image capture parameters of the image capture unit 22 are assumed as the preset image capture parameters, but are not limited thereto. That is, the memory 27 may record the image capture parameters of the image capture unit 22 when the image capture function is in the previous start-up state. Then, the image capture unit 22 may use the image capture parameters recorded in the memory 27 to execute the first start-up processing. Thereby, when the user temporarily stops the image capture unit 22 and then restarts up it, the image capturing is possible with the same image capture parameters as before the stop, without the need of resetting the image capture parameters.

In the present embodiment, the image capture unit 22 transits from the speculative state to the stop state only when the second start-up related operation is not detected after a predetermined time has elapsed since the image capture unit 22 entered the speculative state, but is not limited thereto. That is, when the user executes the operation of confirming start-up of a function other than the image capture function even if a predetermined time has not elapsed since the image capture unit 22 entered the speculative state, the image capture unit 22 may be forcibly moved to the stop state. Thereby, the processing of causing the image capture unit 22 to transit to the stop state does not occur during the start-up processing of other function or during start-up.

The functions other than the image capture function require low power consumption such as music reproduction function. Typically, when a function which needs low power consumption is started up, a clock frequency of the control unit or the like is reduced to lower power consumption but a processing capability therefor is also reduced, and thus other processing may not interrupt during the start-up processing. Such a function may not start the start-up processing when the image capture unit 22 is not in the stop state. In order to start up such a function, the image capture unit 22 is forcibly in the stop state, thereby starting the start-up processing before a predetermined time elapses. An exemplary function other than the image capture unit is a function of using the image capture unit 22 for a purpose other than the image capture function, such as a game application used by capturing a player's face. Also when such a function is started up, the image capture unit 22 is forcibly in the stop state, thereby starting the restart-up processing of the image capture unit 22 before a predetermined time elapses. Another exemplary function other than the image capture function is a function with a large load of the start-up processing such as TV reception function. Also when such a start-up processing with a large load is executed, the image capture unit 22 is forcibly in the stop state, and thus a failure does not occur during the start-up processing.

The exemplary first start-up related operation according to the present embodiment employs an operation of moving the cursor onto an icon or menu item relating to the image capture function, but is not limited thereto. For example, the operation of moving the cursor onto an icon or menu item relating to the image capture function may be the first start-up related operation. Alternatively, an operation of opening a menu screen containing the items relating to the image capture function may be the first start-up related operation.

It is assumed that the image capture function of the image capture device 20 is set to start up in response to vibration of the image capture device 20 for a certain time. In this case, an operation of vibrating the image capture device 20 instantaneously may be the first start-up related operation, and an operation of successively vibrating the image capture device for a certain time may be the second start-up related operation.

The present embodiment assumes pressing the camera key as the second start-up related operation by way of example, but is not limited thereto. For example, it is assumed that the image capture function is not started up only by pressing the camera key and is started up by pressing the camera key and then releasing a finger therefrom. In this case, the operation of pressing the camera key may be assumed as the first start-up related operation and the operation of releasing the pressed camera key may be assumed as the second start-up related operation.

### [Fourth embodiment]

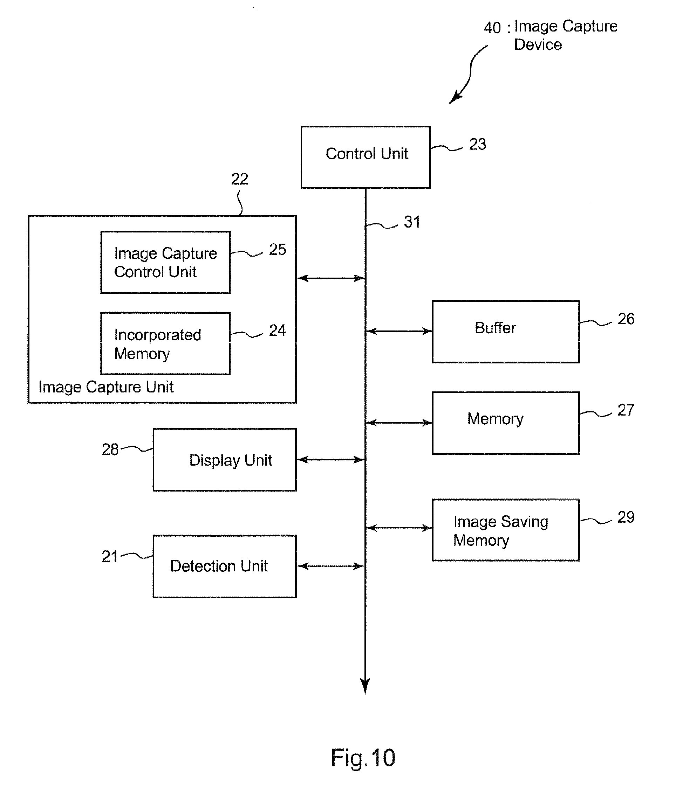

A fourth embodiment according to the present invention will be described below. A structure of an image capture device 40 according to the present embodiment is illustrated in FIG. 10. The structure of the image capture device 40 according to the present embodiment is the same as the structure of the image capture device 20 according to the third embodiment except that the time measurement unit is not provided, and thus a detailed explanation thereof will be omitted.

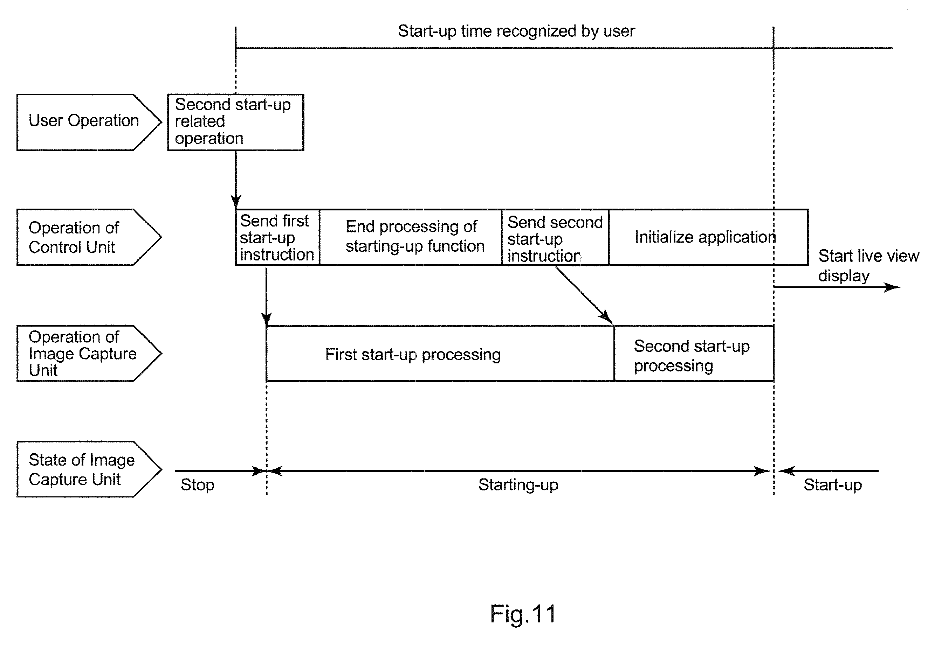

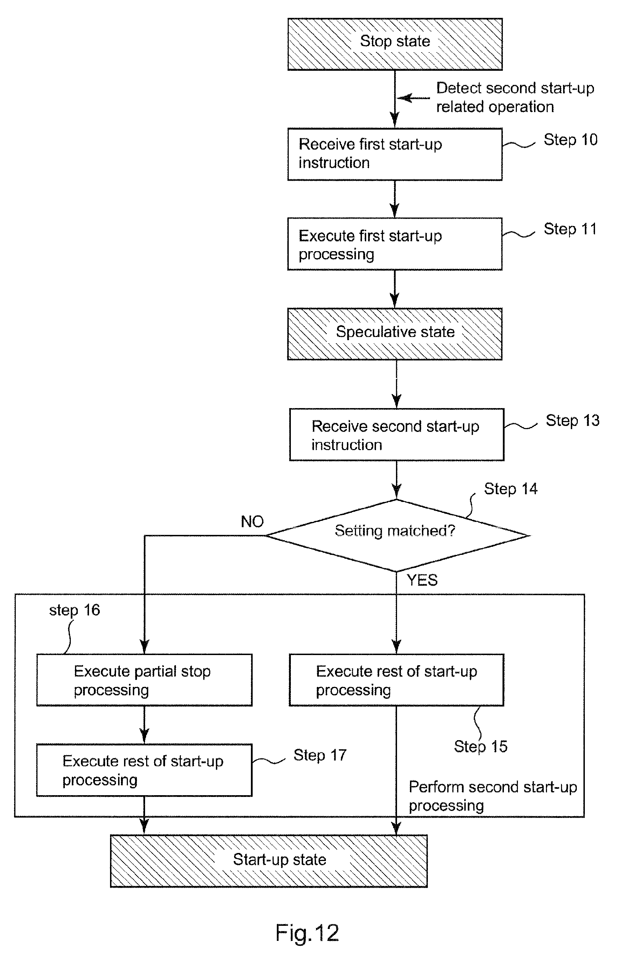

The operations of the image capture device 40 according to the present embodiment will be described below with reference to FIG. 11 and FIG. 12. FIG. 11 is a diagram illustrating the user operations, the operations of the control unit 23, the operations of the image capture unit 22, and the states of the image capture unit 22. FIG. 12 is a diagram illustrating the operations of the image capture unit 22 of FIG. 11 in detail.

The present embodiment assumes that the user executes a second start-up related operation without executing a first start-up related operation of the image capture unit 22. The definitions of the first start-up related operation and the second start-up related operation are the same as those in the third embodiment. That is, the present embodiment assumes that the user executes the operation of confirming start-up of the image capture unit while the image capture unit 22 is in the stop state. The case is such that the user presses the camera key as the second start-up related operation without executing the operation of moving the cursor onto an icon relating to the image capture function set as the first start-up related operation.

When the detection unit 21 detects the second start-up related operation by the user, the control unit 23 sends a first start-up instruction to the image capture unit 22.

When receiving the first start-up instruction sent from the control unit 23 (step 10), the image capture unit 22 executes a first start-up processing (step 11). The first start-up processing is a processing which can be executed before the processing of ending a starting-up function other than the image capture function in the start-up processing of the image capture unit 22 as in the third embodiment. Thereby, the image capture unit 22 enters the speculative state.

On the other hand, when sending the first start-up instruction, the control unit 23 starts the processing of ending a starting-up function among the functions other than the image capture function when the detection unit 21 detects the second start-up related operation. That is, in the present embodiment, the processing of ending a staring-up function other than the image capture unit by the control unit 23 and the first start-up processing by the image capture unit 22 are executed in parallel.

When completing the processing of ending a starting-up function other than the image capture function, the control unit 23 sends a second start-up instruction to the image capture unit 22. Then, the image capture unit 22 receives the second start-up instruction (step 13).

Steps 14 to 17 until the image capture unit 22 enters the start-up state after receiving the second start-up instruction, and the operation at step 18 until live view display is stared are the same as those in the third embodiment, and thus an explanation thereof will be omitted.

As described above, the image capture device 40 according to the present embodiment can further shorten a start-up time recognized by the user without user's executing the first start-up related operation.

The image capture device 40 according to the present embodiment may be also provided with the time measurement unit 30 as in the third embodiment. When the first start-up related operation of the image capture unit 22 by the user is detected, the operations illustrated in FIG. 8 and FIG. 9 may be executed as in the third embodiment.

Also in the image capture device 40 according to the present embodiment, the memory 27 may record the image capture parameters of the image capture unit 22 therein when the image capture function is in the previous start-up state as in the third embodiment. Then, the image capture unit 22 may execute the first start-up processing by use of the image capture parameters recorded in the memory 27.

### [Fifth embodiment]

For a typical image capture device, when the user presses the shutter button and the image capture unit 22 executes image capturing while live view display is being executed, the live view display is switched to preview display of an image to be captured.

When the captured image displayed in the preview display is to be stored, the image capture device stores the captured image in the image saving memory 29. Then, when completing storage into the image saving memory 29, the image capture device restarts the live view display. On the other hand, when the captured image is not to be stored, the image capture device restarts the live view display without storing the captured image into the image saving memory 29.

In this way, when the image capture unit 22 executes image capturing in response to user's pressing of the shutter button, the live view display stops for a certain time.

In the above case, a typical image capture unit for executing the operations illustrated in FIG. 2 described in Background Art stops the live view display and transits from the start-up state to the stop state at the same time. Then, when restarting the live view display, the image capture unit transits to the start-up state again.

That is, once the live view display is stopped, the image capture unit described in Background Art enters the stop state. When restarting the live view display, the start-up processing of the image capture unit 22 has to be initially executed. Thus, for example, it takes about one or two seconds to restart the live view display after the user selects whether to save a captured image, and thus the user can miss a photo opportunity.

In the present embodiment, an image capture device capable of shortening a time necessary for restarting stopped live view display will be described in consideration of the problem.

A structure of the image capture device according to the present embodiment is the same as the image capture device according to the third embodiment.

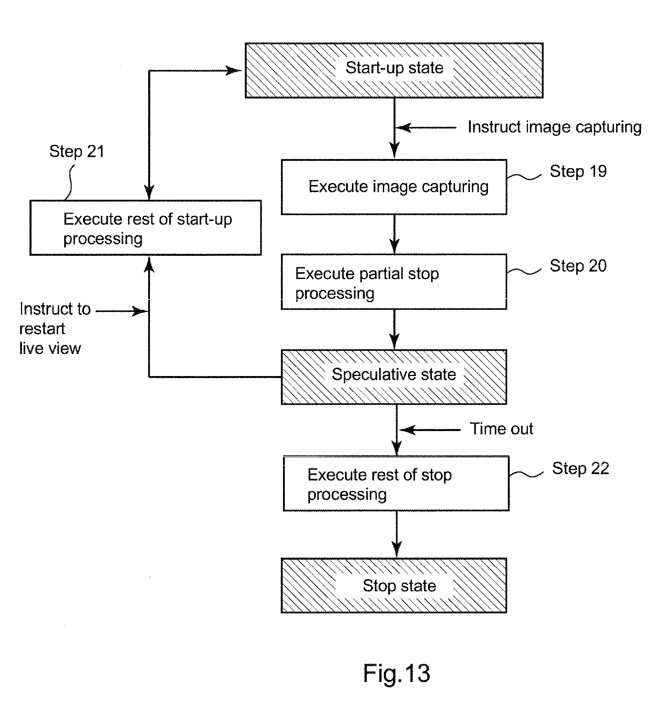

The operations after the image capture unit 22 enters the start-up state in the image capture device according to the present embodiment will be described with reference to FIG. 13.

At first, when the image capture unit 22 is in the start-up state and live view display is being executed, the user presses the shutter button. Thereby, the image capture unit 22 executes image capturing (step 19). When the image capturing by the image capture unit 22 is completed, the control unit 23 stops the live view display and executes a processing of executing preview display of the captured image.

On the other hand, when executing image capturing, the image capture unit 22 executes a processing of stopping part of the image capture function and transits to the speculative state (step 20). The partial stop processing is unnecessary for keeping the live view display. The partial stop processing is reduced, thereby speeding up restart-up of the live view display. For example, only the functions with a drive sound, such as autofocus control processing are stopped, and other processings may not be stopped.

When the user selects to save the captured image displayed in the preview display, the processing of storing the image into the image saving memory 29 is executed. Then, when the storage processing into the image saving memory 29 is completed, the control unit 23 executes the processing of restarting the live view display.

When receiving an instruction of restarting the live view display from the control unit 23, the image capture unit 22 enters the speculative state and thus executes a processing of starting-up the operation stopped in step 20 (step 21). Thereby, the image capture unit 22 enters the start-up state again, and restarts the live view display.

The time measurement unit 30 may measure an elapsed time after the image capture unit 22 enters the speculative state in step 20. When a predetermined time has elapsed since the image capture unit 22 entered the speculative state, the image capture unit 22 may execute the rest of the stop processing and transit to the stop state (step 22). Thereby, when the live view display stops for a certain time or more, the image capture unit 22 enters the stop state, thereby reducing power consumption. In order to restart the live view display after a predetermined time elapses and the image capture unit 22 enters the stop state, the image capture unit 22 executes the normal start-up processing.

As described above, in the present embodiment, the image capture unit 22 enters the speculative state in order to stop the live view display, thereby reducing a time necessary for restarting the live view display.

The present embodiment assumes that the image capture unit 22 enters the speculative state when executing image capturing for preview display, but is not limited thereto. That is, not only when the preview display is executed but also when the live view display needs to be temporarily stopped, the image capture unit 22 may transit to the speculative state. For example, if a call arrives during live view display, the live view display needs to be temporarily stopped.

The operations after the image capture device enters the start-up state have been described in the present embodiment, but the operations of the image capture device according to the second to fourth embodiments may be applied to the operations between the stop state and the start-up state of the image capture device.

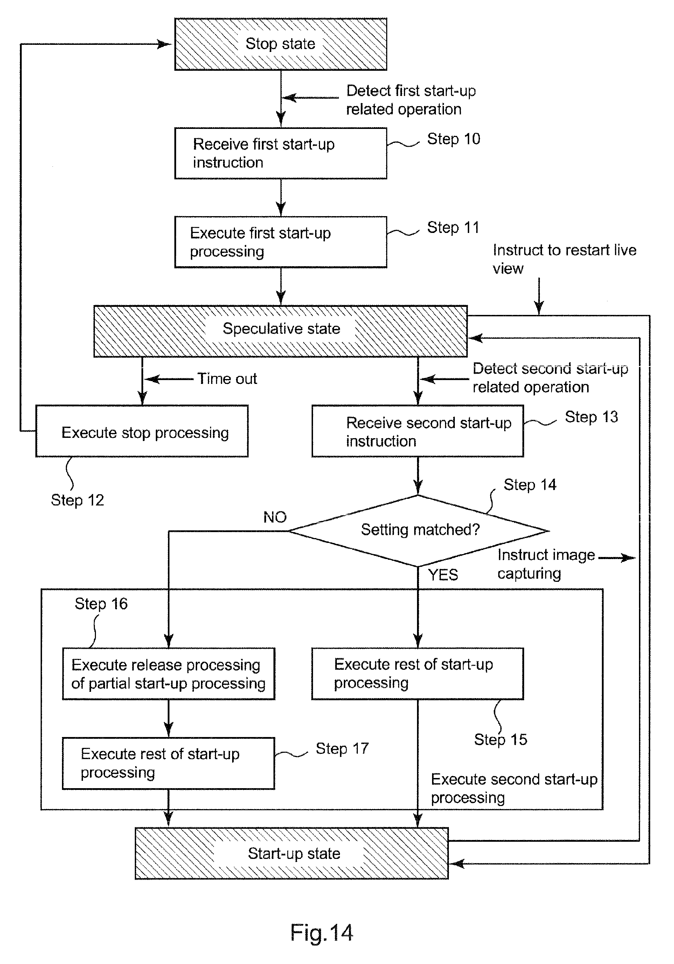

For example, a combination of the operations of the image capture device 20 according to the third embodiment and the operations of the image capture device according to the present embodiment is illustrated in FIG. 14. In FIG. 14, steps 19 to 21 are omitted for simplified illustration.

The present invention has been described with reference to the embodiments, but the present invention is not limited to the embodiments. The structure and details of the present invention can be variously changed within the scope of the present invention which can be understood by those skilled in the art.

The present application claims the priority based on Japanese Patent Application 2010-098409 filed on April 22, 2010 the contents of which are incorporated herein by reference.

### {Industrial Applicability}

The image capture device according to the first to fifth embodiments can be applied to a device comprising an image capture function, such as a digital camera or a portable terminal with a camera function.

### {Reference Signs List}

- 10, 20, 40:: Image capture device
- 11, 21:: Detection unit
- 12, 22:: Image capture unit
- 13, 23:: Control unit
- 24:: Incorporated memory
- 25:: Image capture control unit
- 26:: Buffer
- 27:: Memory
- 28:: Display unit
- 29:: Image saving memory
- 30:: Time measurement unit
- 31:: Bus

## Claims

1. An image capture device comprising:
an image capture unit configured to execute image capturing;
a detection unit configured to detect start-up related operations relating to start-up of an image capture function; and
a control unit configured to control the image capture unit,
wherein when the detection unit detects the start-up related operation, the control unit sends a first start-up instruction to the image capture unit, and then executes a processing of ending at least part of starting-up functions other than the image capture function at a predetermined timing, and
when receiving the first start-up instruction, the image capture unit executes a first start-up processing as part of the start-up processing of the image capture unit thereby to enter a speculative state.

2. The image capture device according to claim 1,
wherein when the end processing is completed, the control unit sends a second start-up instruction to the image capture unit, and
when receiving the second start-up instruction, the image capture unit executes a second start-up processing not contained in the first start-up processing in the start-up processing.

3. The image capture device according to claim 1 or 2,
wherein the start-up related operations contain a first start-up related operation which is executed before confirming start-up of the image capture function and a second start-up related operation for confirming start-up of the image capture function,
when the detection unit detects the first start-up related operation, the control unit sends the first start-up instruction, and
when the detection unit detects the second start-up related operation, the control unit starts the end processing.

4. The image capture device according to claim 3,
wherein when the detection unit detects the second start-up related operation without detecting the first start-up related operation, the control unit sends the first start-up instruction and then executes the end processing.

5. The image capture device according to claim 3,
wherein when the detection unit does not detect the second start-up related operation within a predetermine time after the image capture unit enters the speculative state,
the image capture unit transits from the speculative state to a stop state.

6. The image capture device according to any one of claims 1 to 5,
wherein when a function other than the image capture function is starting up while the image capture unit is in the speculative state,
the image capture unit transits from the speculative state to a stop state.

7. The image capture device according to any one of claims 1 to 6,
wherein at least part of the end processing and at least part of the first start-up processing are executed in parallel.

8. The image capture device according to any one of claims 1 to 7, further comprising:
a record unit configured to record a previous image capture condition as an image capture condition of the image capture unit when the image capture function is in a previous start-up state,
wherein the image capture unit executes the first start-up processing based on the previous image capture condition.

9. The image capture device according to claim 8,
wherein when it is confirmed that the image capture unit is started up under a different image capture condition from the previous image capture condition in the start-up related operation,
the image capture unit executes a processing of releasing at least part of the first start-up processing in the second start-up processing, and then executes a start-up processing based on the image capture condition confirmed in the second start-up related operation.

10. The image capture device according to any one of claims 1 to 9, further comprising:
a buffer configured to record an image captured by the image capture unit; and
a display unit configured to display live view of the captured image recorded in the buffer,
wherein when the live view display is stopped, the image capture unit transits from a start-up state to the speculative state.

11. The image capture device according to claim 10, wherein when a predetermined time elapses after the image capture unit transits from the start-up state to the speculative state, the image capture unit transits from the speculative state to a stop state.

12. An image capture method comprising:
a detection step of detecting start-up related operations relating to start-up of an image capture function;
a first start-up instruction step of, when the start-up related operation is detected in the detection step, sending a first start-up instruction;
an end step of, after the first start-up instruction is sent in the first start-up instruction step, ending at least part of starting-up functions other than the image capture function at a predetermined timing; and
a first start-up step of, on reception of the first start-up instruction, executing a first start-up processing as part of a start-up processing of an image capture unit so that the image capture unit enters a speculative state.

13. The image capture method according to claim 12, further comprising:
a second start-up instruction step of, when the end step is completed, sending a second start-up instruction; and
a second start-up step of, on reception of the second start-up instruction, executing a second start-up processing not contained in the first start-up processing in the start-up processing.

14. The image capture method according to claim 12 or 13,
wherein the start-up related operations contain a first start-up related operation which is executed before start-up of the image capture function is confirmed, and a second start-up related operation of confirming start-up of the image capture function,
when the first start-up related operation is detected in the detection step, the first start-up instruction step is executed, and
when the second start-up related operation is detected in the detection step, the end processing is executed.

15. The image capture method according to claim 14,
wherein when not the first start-up related operation but the second start-up related operation is detected in the detection step, the end step is executed after the first start-up instruction step is executed.

16. The image capture method according to claim 14, further comprising:
a step of, when the second start-up related operation is not detected in the detection step within a predetermined time after the image capture unit enters the speculative state, changing the image capture unit from the speculative state to a stop state.

17. The image capture method according to any one of claims 12 to 16, further comprising the step of:
when a function other than the image capture function is starting up while the image capture unit is in the speculative state, changing the image capture unit from the speculative state to a stop state.

18. The image capture method according to any one of claims 12 to 17,
wherein at least part of the processing in the end step and at least part of the processing in the first start-up step are executed in parallel.

19. The image capture method according to any one of claims 12 to 18, further comprising:
a record step of recording a previous image capture condition as an image capture condition of the image capture unit when the image capture function is in a previous start-up state,
wherein the first start-up processing is executed under the previous image capture condition in the first start-up step.

20. The image capture method according to claim 19,
wherein when it is confirmed that the image capture unit is started up under a different image capture condition from the previous image capture condition in the start-up related operations, a processing of releasing at least part of the first start-up processing is executed in the second start-up step, and then a start-up processing based on the image capture condition confirmed in the second start-up related operation is executed.

21. The image capture method according to any one of claims 12 to 20, further comprising the steps of:
displaying live view of an image captured by the image capture unit; and
when the live view display is stopped, changing the image capture unit from a start-up state to the speculative state.

22. The image capture method according to claim 21, further comprising the step of:
changing the image capture unit from the speculative state to a stop state when a predetermined time elapses after the image capture unit transits from the start-up state to the speculative state.

23. A computer program for causing a computer to execute:
a detection step of detecting start-up related operations relating to start-up of an image capture function;
a first start-up instruction step of, when the start-up related operation is detected in the detection step, sending a first start-up instruction;
an end step of, after the first start-up instruction is sent in the first start-up instruction step, ending at least part of starting-up functions other than the image capture function at a predetermined timing; and
a first start-up step of, on reception of the first start-up instruction, executing a first start-up processing as part of a start-up processing of an image capture unit so that the image capture unit enters a speculative state.

24. A recording medium configured to record the computer program according to claims 23 therein.
